# EUROPÄISCHE PATENTANMELDUNG

(11) **EP 3 064 368 A1**
(43) Veröffentlichungstag der Anmeldung: **07.09.2016**
(21) Anmeldenummer: 16158106.1
(22) Anmeldetag: 01.03.2016
(51) Int. Cl.: B43K 29/08, G06F 3/0354

(54) **SCHREIB- ODER EINGABESTIFT**

(30) Priorität: 02.03.2015 DE 102015002516
(71) Anmelder: Esselte Leitz GmbH & Co. KG, 70469 Stuttgart (DE)
(72) Erfinder: GROCH, Hans-Werner, 70327 Stuttgart (DE)
(74) Vertreter: Patentanwälte Bregenzer und Reule Partnerschaftsgesellschaft mbB

(57) **Zusammenfassung**

Die Erfindung betrifft einen Schreib- oder Eingabestift (10) mit einem eine Schreibspitze (14) zum Schreiben auf einer Unterlage wie Papier oder einem Touchscreen aufweisenden Schreibteil (12) und mit einer mit dem Schreibteil (12) lösbar verbundenen, eine Hülle (18) zum Umhüllen der Schreibspitze (14) aufweisenden Kappe (16). Erfindungsgemäß ist vorgesehen, dass der Schreibteil (12) ein Sendegerät zum Abstrahlen von Signalen in Form von elektromagnetischen Wellen sowie Eingabeelemente (22) zur Bedienung des Sendegeräts aufweist und dass die Kappe (16) ein ein Verbindungselement (26) zum Verbinden mit einem Datenverarbeitungsgerät aufweisendes Empfangsgerät (24) zum Empfangen der Signale aufweist.

## Beschreibung

Die Erfindung betrifft einen Schreib- oder Eingabestift mit einem eine Schreibspitze zum Schreiben auf einer Unterlage wie Papier oder einem Touchscreen aufweisenden Schreibteil und mit einer mit dem Schreibteil lösbar verbundenen, eine Hülle zum Umhüllen der Schreibspitze aufweisenden Kappe.

Solche Stifte sind als Füllfederhalter, Kugelschreiber, Faserstifte oder Eingabestifte für Touchscreens vielfach bekannt. Sie weisen einen Schreibteil mit einer Schreibspitze auf, mit der auf die betreffende Unterlage, wie beispielsweise Papier oder einen Touchscreen, geschrieben werden kann. Zudem ist eine Kappe vorgesehen, die lösbar mit dem Schreibteil verbunden ist und eine Hülle aufweist, die die Schreibspitze vollständig umhüllt, wenn der Stift nicht in Gebrauch ist, und sie somit vor dem Austrocknen oder vor Beschädigungen bewahrt. Wenn der Stift in Gebrauch genommen wird, wird die Kappe abgenommen, so dass die Schreibspitze frei liegt und zum Schreiben benutzt werden kann. Die Kappe wird während des Schreibens meist nicht benötigt und muss abgelegt oder in der Hand gehalten werden.

Es ist Aufgabe der Erfindung, einen Schreib- oder Eingabestift der eingangs genannten Art derart weiterzubilden, dass er besser für Präsentationen verwendet werden kann.

Diese Aufgabe wird erfindungsgemäß durch einen Schreib- oder Eingabestift mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den Stift mit einer Datenübertragungsfunktion zu versehen, die es erlaubt, dass der Benutzer während einer Präsentation, beispielsweise mittels eines Notebooks, mit dem Stift nicht nur schreiben kann, sondern diesen auch zur Steuerung der Präsentation verwenden kann. Zu diesem Zweck weist der Schreibteil ein Sendegerät auf, das Signale in Form von elektromagnetischen Wellen abstrahlen kann. Er weist zudem Eingabeelemente wie beispielsweise Druckknöpfe auf, mit denen das Sendegerät bedient werden kann, beispielsweise zum Weiterschalten auf die nächste Seite der Präsentation. Die Kappe, die beim Gebrauch des Stiftteils ohnehin nicht benötigt wird, weist ein Empfangsgerät zum Empfangen der Signale auf, das wiederum ein Verbindungselement zum Verbinden mit einem Datenverarbeitungsgerät aufweist, beispielsweise zum Verbinden mit einem die Präsentation steuernden Notebook. Beim Gebrauch wird die Kappe vom Stiftteil abgenommen und das Verbindungselement, das zweckmäßig als USB-Stecker ausgebildet ist, wird in das Datenverarbeitungsgerät eingesteckt, so dass eine Signalübertragung vom in der Hand gehaltenen Stiftteil zum Datenverarbeitungsgerät möglich ist.

Gemäß einer vorteilhaften Weiterbildung der Erfindung ist das Empfangsgerät zwischen zwei Endstellungen in einer Längsrichtung verschieblich in der Hülle aufgenommen. Dabei ragt das Verbindungselement in einer ersten der Endstellungen vorzugsweise vollständig aus der Hülle, so dass ein problemloses Einstecken in das Datenverarbeitungsgerät möglich ist. Es ist von Vorteil, wenn das Empfangsgerät in einer zweiten der Endstellungen vollständig in der Hülle aufgenommen ist und/oder wenn das Verbindungselement in der zweiten Endstellung zumindest teilweise in der Hülle aufgenommen ist. Nach Gebrauch des Stifts kann das Empfangsgerät dann wieder ganz oder teilweise in die Hülle geschoben werden, so dass es nicht oder nur wenig aus ihrer Oberfläche heraus steht, wenn es nicht benötigt wird.

Um zu verhindern, dass das Empfangsgerät gegenüber der Hülle unkontrollierte Bewegungen ausführt, ist gemäß einer vorteilhaften Weiterbildung der Erfindung vorgesehen, dass das Empfangsgerät in mindestens einer der Endstellungen und vorzugsweise in beiden Endstellungen lösbar an der Hülle fixiert ist. Zur Fixierung kann das Empfangsgerät ein Rastelement aufweisen, das in der ersten Endstellung an einer ersten Anlagefläche in der Hülle und in der zweiten Endstellung an einer der ersten Anlagefläche abgewandten zweiten Anlagefläche in der Hülle anliegt. Die beiden Anlageflächen sind vorteilhaft an einem Anlageelement in der Hülle angeordnet und begrenzen dieses zu zwei einander abgewandten Seiten.

Das Empfangsgerät weist zweckmäßig ein Führungselement auf, wobei zwischen dem Rastelement und dem Führungselement ein Führungskanal für das Anlageelement angeordnet ist. Dies ermöglicht ein gut definiertes Verschieben des Empfangsgeräts in der Hülle. Dabei wird bevorzugt, dass das Empfangsgerät quer zur Längsrichtung in der Hülle gegen die Kraft einer Rückstellfeder beweglich und dadurch das Rastelement von den Anlageflächen weg beweglich ist. Um die Fixierung des Eingabegeräts in seiner jeweiligen Endstellung zu lösen, muss es gegen die Kraft der Rückstellfeder bewegt werden.

Vorteilhaft ist ein mit dem Empfangsgerät verbundenes, zumindest teilweise außerhalb der Hülle angeordnetes Befestigungselement vorgesehen. Dieses kann dazu benutzt werden, den Stift an einer hierfür vorgesehenen Stelle, beispielsweise in einer Aktentasche oder an einem Kleidungsstück, zu befestigen. Wenn das Befestigungselement mit dem Empfangsgerät verbunden ist, kann es überdies dazu verwendet werden, dass Empfangsgerät zwischen seinen Endstellungen zu verschieben. Das Befestigungselement besteht vorteilhaft zumindest teilweise aus Metall und ist elektrisch leitend mit dem Empfangsgerät verbunden, so dass es zusätzlich eine Antennenfunktion ausüben kann. Bei dem Befestigungselement kann es sich um eine elastisch biegsame Klemmfeder handeln, die aus der Hülle herausragt und sich im wesentlichen parallel zu einer Außenfläche der Hülle ein Stück weit in der Längsrichtung zum Schreibteil hin bis zu einem freien Ende erstreckt.

Vorteilhaft ist das Empfangsgerät lösbar und austauschbar in der Hülle aufgenommen. Es kann dann entnommen und beispielsweise durch ein anderes Empfangsgerät oder durch einen USB-Speicherstick ersetzt werden. Die Kappe kann zusätzlich einen Datenspeicher aufweisen, der vorzugsweise mittels des selben Verbindungselements mit einem Datenverarbeitungsgerät verbindbar ist wie das Empfangsgerät. Der Datenspeicher kann beispielsweise zum Speichern der für die Präsentation benötigten Daten verwendet werden.

Im Folgenden wird die Erfindung anhand eines in der Zeichnung schematisch dargestellten Ausführungsbeispiels näher erläutert. Es zeigen
- Figur 1a, 1b: einen Stift mit mit dem Stiftkörper verbundener Kappe und in die Hülle der Kappe eingeschobenem Empfangsgerät sowie mit vom Stiftkörper abgenommener Kappe und aus der Hülle der Kappe herausgezogenem Empfangsgerät und
- Fig. 2a bis d: die Kappe des Stifts gemäß Fig. 1a, 1 b im Längsschnitt mit dem Empfangsgerät in vier verschiedenen Stellungen.

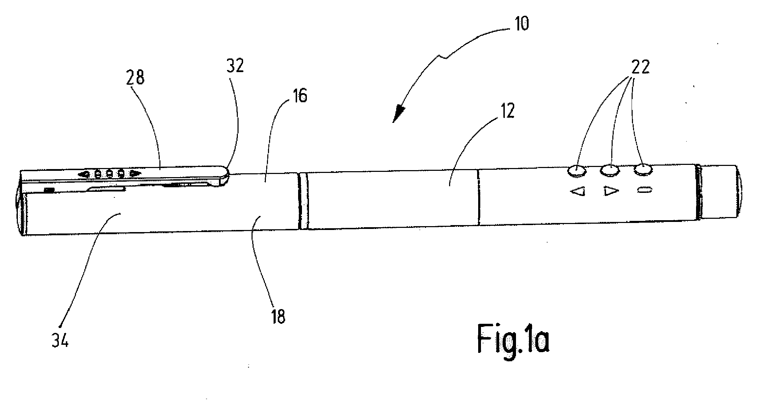

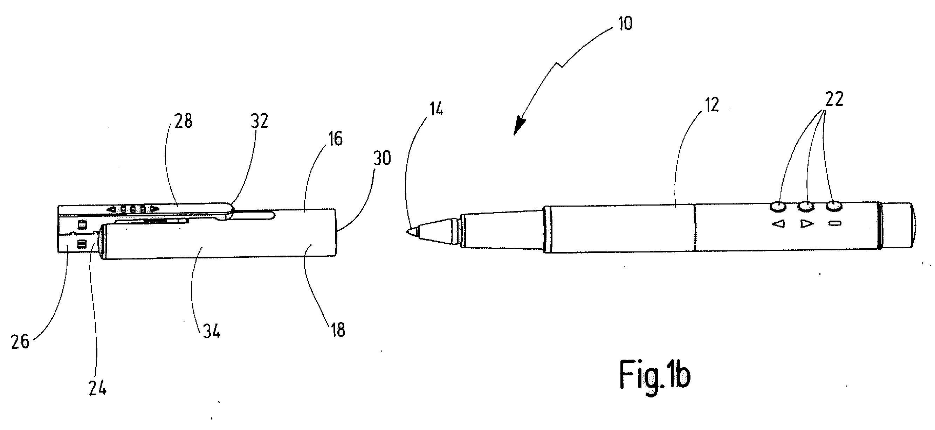

Der in Fig. 1a, 1 b dargestellte Stift 10 weist ein Schreibteil 12 mit einer Schreibspitze 14 auf, mit der auf einer Unterlage geschrieben werden kann. Der Stift 10 weist zudem eine Kappe 16 auf, die wiederum eine einseitig an einer Öffnung 30 offene Hülle 18 aufweist und lösbar mit dem Schreibteil 12 verbunden werden kann, wie in Fig. 1a gezeigt, so dass die Schreibspitze 14 in einem Aufnahmeraum 20 der Hülle 18 aufgenommen ist und von dieser im Zusammenwirken mit dem Schreibteil 12 allseitig eingeschlossen wird. Durch Abziehen der Kappe 16 vom Schreibteil 12, auf das sie in der Darstellung gemäß Fig. 1a aufgerastet ist, wird die Schreibspitze 14 für den Gebrauch freigelegt (vgl. Fig. 1 b).

Im Schreibteil 12 ist ein in der Zeichnung nicht näher dargestelltes Sendegerät integriert, das mittels Eingabeelementen in Form von Druckknöpfen 22 bedient werden kann und der Abstrahlung von Signalen in Form von elektromagnetischen Wellen dient. Das zugehörige Empfangsgerät, mit dem die Signale empfangen und an eine Datenverarbeitungseinrichtung weitergegeben werden können, ist Bestandteil der Kappe 16 und verschieblich in der Hülle 18 aufgenommen. Es weist ein Verbindungselement in Form eines USB-Steckers 26 auf, welcher in eine herkömmliche USB-Buchse eines Datenverarbeitungsgeräts wie beispielsweise eines Notebooks eingesteckt werden kann. Das Empfangsgerät 24 ist fest und elektrisch leitend mit einer metallenen Klemmfeder 28 verbunden, welche aus der Hülle 18 an deren der Öffnung 30 entgegengesetztem Ende herausragt und sich in einer Längsrichtung der Kappe 16 in Richtung zur Öffnung 30 bis zu einem freien Ende 32 parallel zur Außenfläche 34 der Hülle 18 erstreckt. Am freien Ende 32 ist die Klemmfeder 28 verdickt, so dass sie dort an der Außenfläche 34 der Hülle 18 anliegt. Die Klemmfeder 28 ist elastisch biegsam, so dass beispielsweise ein Kleidungsstück zwischen dem freien Ende 32 und der Außenfläche 34 eingeklemmt werden kann, um den Stift 10 sicher zu verwahren.

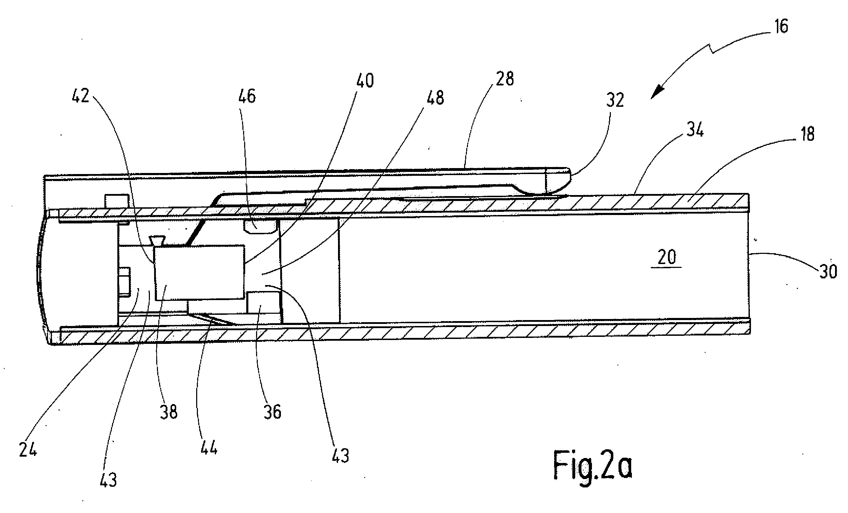

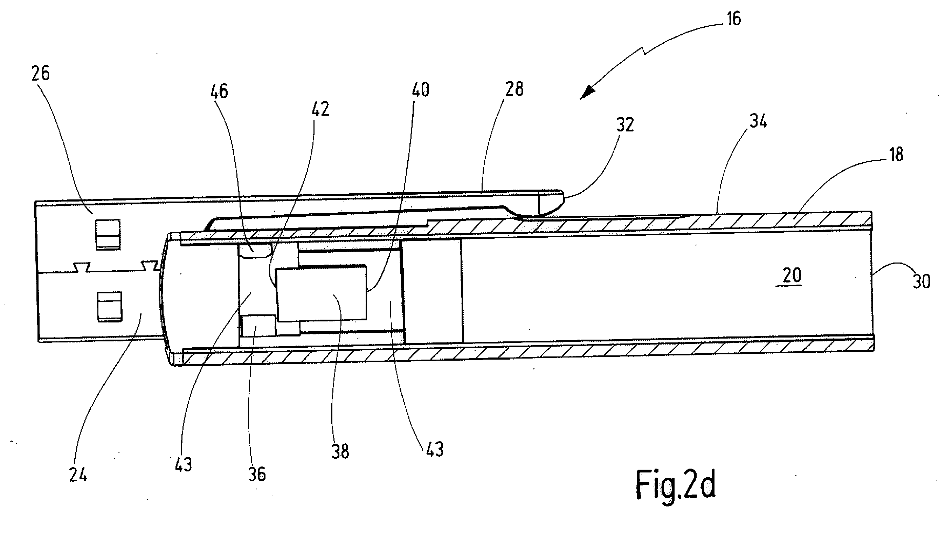

Das Empfangsgerät 24 ist zwischen zwei in Fig. 2a und Fig. 2d gezeigten Endstellungen in der Längsrichtung gegenüber der Hülle 18 verschieblich, wobei zum Verschieben an der Klemmfeder 28 angegriffen werden kann. In beiden Endstellungen ist das Empfangsgerät 24 lösbar in der Hülle 18 fixiert. Zu diesem Zweck weist es ein Rastelement 36 auf, während in der Hülle 18 ein Anlageelement 38 angeordnet ist. Letzteres weist eine der Öffnung 30 zugewandte erste Anlagefläche auf, an der das Rastelement 36 in der ersten Endstellung anliegt. In der zweiten Endstellung liegt das Rastelement 36 an einer der ersten Anlagefläche 40 abgewandten zweiten Anlagefläche 42 an. In der ersten Endstellung ist der USB-Stecker 26 vollständig in der Hülle 18 aufgenommen, wie in Fig. 2a gezeigt, während er in der zweiten Endstellung (Fig. 2d) vollständig aus der Hülle 18 ragt und in eine entsprechende Buchse eingesteckt werden kann. In beiden Endstellungen befindet sich das Rastelement 36 in einem sich in einer Querrichtung quer zur Längsrichtung erstreckenden Aufnahmeschacht 43, der jeweils auf einer Seite von der betreffenden Anlagefläche 40, 42 begrenzt wird.

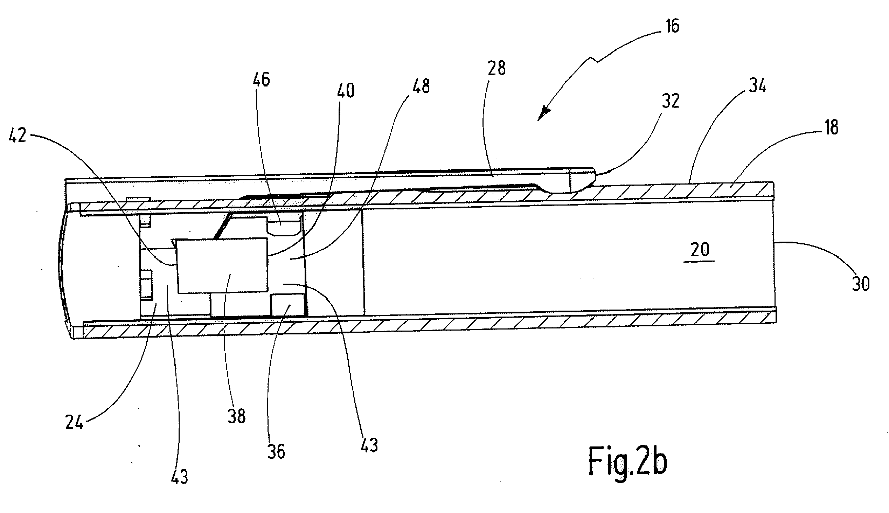

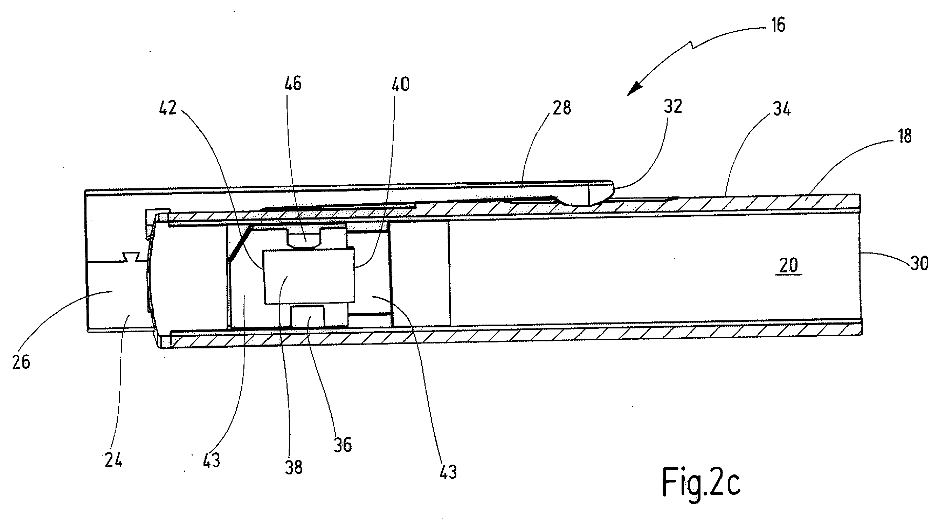

Zum Lösen der Fixierung des Empfangsgeräts 24 aus seinen Endstellungen ist dieses gegen die Kraft einer Rückstellfeder 44 in der Querrichtung beweglich in der Hülle 18 gelagert, wie in Fig. 2b, 2c gezeigt. Es weist zudem ein Führungselement 46 auf, das zusammen mit dem Rastelement 36 einen Führungskanal 48 begrenzt, in dem sich das Anlageelement 38 während des Verschiebens des Empfangsgeräts 24 in der Längsrichtung befindet. Die durch den Abstand des Rastelements 36 vom Führungselement 46 vorgegebene Breite des Führungskanals 48 entspricht dabei der Breite des Anlageelements 38 zuzüglich etwas Spiel, so dass eine präzise Führung gewährleistet ist. Nach Herausschieben des USB-Steckers 26 aus der Hülle 18 erfolgt ein Einrasten des Empfangsgeräts 24 in der zweiten Endstellung aufgrund der Rückstellkraft der Rückstellfeder 44, wenn der auf die Klemmfeder 28 in der Querrichtung wirkende Druck weggenommen wird und das Rastelement 36 dadurch in den betreffenden Aufnahmekanal 43 bewegt wird.

Zusammenfassend ist folgendes festzuhalten: Die Erfindung betrifft einen Schreib- oder Eingabestift 10 mit einem eine Schreibspitze 14 zum Schreiben auf einer Unterlage wie Papier oder einem Touchscreen aufweisenden Schreibteil 12 und mit einer mit dem Schreibteil 12 lösbar verbundenen, eine Hülle 18 zum Umhüllen der Schreibspitze 14 aufweisenden Kappe 16. Erfindungsgemäß ist vorgesehen, dass der Schreibteil 12 ein Sendegerät zum Abstrahlen von Signalen in Form von elektromagnetischen Wellen sowie Eingabeelemente 22 zur Bedienung des Sendegeräts aufweist und dass die Kappe 16 ein ein Verbindungselement 26 zum Verbinden mit einem Datenverarbeitungsgerät aufweisendes Empfangsgerät 24 zum Empfangen der Signale aufweist.

## Patentansprüche

1. Schreib- oder Eingabestift mit einem eine Schreibspitze (14) zum Schreiben auf einer Unterlage wie Papier oder einem Touchscreen aufweisenden Schreibteil (12) und mit einer mit dem Schreibteil (12) lösbar verbundenen, eine Hülle (18) zum Umhüllen der Schreibspitze (14) aufweisenden Kappe (16), **dadurch gekennzeichnet, dass** der Schreibteil (12) ein Sendegerät zum Abstrahlen von Signalen in Form von elektromagnetischen Wellen sowie Eingabeelemente (22) zur Bedienung des Sendegeräts aufweist und dass die Kappe (16) ein ein Verbindungselement (26) zum Verbinden mit einem Datenverarbeitungsgerät aufweisendes Empfangsgerät (24) zum Empfangen der Signale aufweist.

2. Schreib- oder Eingabestift nach Anspruch 1, **dadurch gekennzeichnet, dass** das Verbindungselement (26) ein USB-Stecker ist.

3. Schreib- oder Eingabestift nach Anspruch 1 oder 2, **dadurch gekennzeichnet, dass** das Empfangsgerät (24) zwischen zwei Endstellungen in einer Längsrichtung verschieblich in der Hülle (18) aufgenommen ist.

4. Schreib- oder Eingabestift nach Anspruch 3, **dadurch gekennzeichnet, dass** das Verbindungselement (26) in einer ersten der Endstellungen vollständig aus der Hülle (18) ragt.

5. Schreib- oder Eingabestift nach Anspruch 3 oder 4, **dadurch gekennzeichnet, dass** das Empfangsgerät (24) in einer zweiten der Endstellungen vollständig in der Hülle (18) aufgenommen ist und/oder dass das Verbindungselement (26) in der zweiten Endstellung zumindest teilweise in der Hülle (18) aufgenommen ist.

6. Schreib- oder Eingabestift nach einem der Ansprüche 3 bis 5, **dadurch gekennzeichnet, dass** das Empfangsgerät (24) in mindestens einer der Endstellungen und vorzugsweise in beiden Endstellungen lösbar an der Hülle (18) fixiert ist.

7. Schreib- oder Eingabestift nach Anspruch 6, **dadurch gekennzeichnet, dass** das Empfangsgerät (24) ein Rastelement (36) aufweist, das in der ersten Endstellung an einer ersten Anlagefläche (40) in der Hülle (18) und in der zweiten Endstellung an einer der ersten Anlagefläche (40) abgewandten zweiten Anlagefläche (42) in der Hülle (18) anliegt.

8. Schreib- oder Eingabestift nach Anspruch 7, **dadurch gekennzeichnet, dass** die Anlageflächen (40, 42) ein Anlageelement (38) in der Hülle (18) zu zwei einander abgewandten Seiten begrenzen.

9. Schreib- oder Eingabestift nach Anspruch 8, **dadurch gekennzeichnet, dass** das Empfangsgerät (24) ein Führungselement (46) aufweist, wobei zwischen dem Rastelement (36) und dem Führungselement (46) ein Führungskanal (48) für das Anlageelement (38) angeordnet ist.

10. Schreib- oder Eingabestift nach einem der Ansprüche 7 bis 9, **dadurch gekennzeichnet, dass** das Empfangsgerät (24) quer zur Längsrichtung in der Hülle (18) gegen die Kraft einer Rückstellfeder (44) beweglich und dadurch das Rastelement (36) von den Anlageflächen (40, 42) weg beweglich ist.

11. Schreib- oder Eingabestift nach einem der vorangehenden Ansprüche, **gekennzeichnet durch** ein mit dem Empfangsgerät (24) verbundenes, zumindest teilweise außerhalb der Hülle (18) angeordnetes Befestigungselement (28).

12. Schreib- oder Eingabestift nach Anspruch 11, **dadurch gekennzeichnet, dass** das Befestigungselement (28) zumindest teilweise aus Metall besteht und elektrisch leitend mit dem Empfangsgerät (24) verbunden ist.

13. Schreib- oder Eingabestift nach Anspruch 11 oder 12, **dadurch gekennzeichnet, dass** das Befestigungselement (28) eine elastisch biegsame Klemmfeder ist, die aus der Hülle (18) herausragt und sich im wesentlichen parallel zu einer Außenfläche (34) der Hülle (18) ein Stück weit in der Längsrichtung zum Schreibteil (12) hin bis zu einem freien Ende (32) erstreckt.

14. Schreib- oder Eingabestift nach einem der vorangehenden Ansprüche, **dadurch gekennzeichnet, dass** das Empfangsgerät (24) lösbar und austauschbar in der Hülle (18) aufgenommen ist.

15. Schreib- oder Eingabestift nach einem der vorangehenden Ansprüche, **dadurch gekennzeichnet, dass** die Kappe (16) einen Datenspeicher aufweist, der vorzugsweise mittels des Verbindungselements (26) mit einem Datenverarbeitungsgerät verbindbar ist.
